## Europäisches Patentamt
## European Patent Office
## Office européen des brevets

(19)

(11) Numéro de publication: **0 107 986**
**B1**

(12)

# FASCICULE DE BREVET EUROPEEN

(45) Date de publication du fascicule du brevet:
**29.01.86**

(21) Numéro de dépôt: **83401818.6**

(22) Date de dépôt: **19.09.83**

(51) Int. Cl.⁴: **C 10 G 49/14,** C 10 G 49/00,
B 01 J 8/22, B 01 J 8/02

(54) Procédé et dispositif d'hydroconversion d'hydrocarbures.

(30) Priorité: **04.10.82 FR 8216597**

(43) Date de publication de la demande:
**09.05.84 Bulletin 84/19**

(45) Mention de la délivrance du brevet:
**29.01.86 Bulletin 86/5**

(84) Etats contractants désignés:
**BE DE GB IT NL**

(56) Documents cités:
**DE - A - 1 933 857**
**FR - A - 2 504 821**
**GB - A - 1 309 427**
**GB - A - 2 005 151**
**GB - A - 2 055 607**
**NL - C - 79 876**

(73) Titulaire: **INSTITUT FRANCAIS DU PETROLE, 4, Avenue de Bois-Préau, F-92502 Rueil-Malmaison (FR)**

(72) Inventeur: **Bischoff, Didier, 20, rue Danton, F-92500 Rueil-Malmaison (FR)**
Inventeur: **Courteheuse, Gérard, 290, avenue Napoléon Bonaparte, F-92500 Rueil-Malmaison (FR)**
Inventeur: **Renard, Pierre, 8, Allée des Romarins, F-78860 Saint-Nom-la-Bretèche (FR)**

## Description

La présente invention concerne un procédé et des dispositifs de traitement (ou hydrotraitement) catalytique d'une charge fluide et plus particulièrement de démétallisation, de désulfuration, d'hydrotraitement et de conversion ou d'hydroconversion d'hydrocarbures, en lit fixe ou mobile comme expliqué ci-dessous.

L'invention est notamment applicable aux traitements catalytiques de charges liquides, telles que, par exemple, distillats issus des bruts pétroliers lourds, des résidus de la distillation d'hydrocarbures atmosphériques et sous vide, ces traitements étant effectués généralement en présence d'hydrogène et/ou de mélanges gazeux riches en hydrogène, sur un lit de catalyseur solide, le catalyseur étant utilisé sous forme de particules (catalyseur extrudé, grains de formes diverses, billes, etc.).

Lors de tels traitements catalytiques, on constate une désactivation souvent rapide du catalyseur, due à la présence de poisons catalytiques, à la formation de coke, au dépôt de certains métaux...

Cette désactivation nécessite le remplacement fréquent de tout ou partie du lit catalytique.

Dans le procédé de l'invention, le soutirage du catalyseur hors du réacteur est effectué progressivement. Le terme «progressivement» signifie que le catalyseur peut être soutiré:

— soit périodiquement, par exemple avec une fréquence de 1/10 à 10 d, en ne soutirant à la fois qu'une fraction, par exempel 0,5 à 15% de la quantité totale du catalyseur. On peut, selon les besoins, soutirer davantage de catalyseur et par exemple soutirer jusqu'à 100% de la quantité totale de catalyseur, c'est-à-dire la totalité du catalyseur.

La fréquence de soutirage du catalyseur peut être beaucoup plus rapide (de l'ordre de la minute ou de la seconde par exemple), la quantité soutirée étant réduite en proportion,

— soit en continu.

Le catalyseur frais est introduit à la partie supérieure du réacteur; le système d'injection de la charge et de l'hydrogène ensemble sous la forme d'un fluide mixte qui chemine de bas en haut du réacteur, fait l'objet de la présente invention.

Le procédé selon l'invention et les dispositifs selon l'invention conviennent ainsi pour l'injection d'une charge et pour le soutirage de particules catalytiques de réacteurs de craquage, d'hydrocraquage, d'hydroréformage, de fabrication d'hydrocarbures aromatiques, d'isomérisation d'hydrocarbures paraffiniques, naphténiques ou aromatiques, les réactions diverses d'hydrogénation, d'hydrotraitement, de déshydrogénation, d'alkylation, de transalkylation, d'hydrodécyclisation, d'hydrodéalkylation, les traitements d'hydroviscoréduction, etc., réacteurs où la charge et/ou les gaz qui y sont injectés, cheminent de bas en haut.

La charge fluide, qui est un mélange d'un liquide et d'un gaz est introduite dans le réacteur ou l'enceinte renfermant des particules catalytiques par des organes de distribution situés à la partie inférieure du réacteur ou de l'enceinte et circule à contre-courant du catalyseur de bas en haut («upflow») avant d'être évacuée, après son traitement, à la partie supérieure du réacteur (ou de l'enceinte que l'on désigne arbitrairement «réacteur» dans la suite de la présente description). L'écoulement du catalyseur, par gravité, assure une descente régulière du lit catalytique, tandis que la circulation ascendante de la charge fluide permet en particulier un réglage facile du temps de séjour et assure un détassement contrôlé du lit.

Par ailleurs, la circulation à contre-courant de la charge et du catalyseur permet d'obtenir une conversion catalytique poussée puisque le catalyseur frais introduit au sommet du réacteur traite une charge presque convertie (c'est-à-dire contenant essentiellement des composés dont la transformation est difficile), tandis qu'au fond du réacteur, le catalyseur usé traite une charge fraîche (c'est-à-dire riche en composés faciles à transformer), ce qui réalise efficacement les premières étapes de la conversion. Il en résulte une utilisation systématique du catalyseur dans le réacteur, un profil thermique du lit catalytique plus régulier que dans une circulation du type cocourant, avec, en particulier, au bas du réacteur, une température plus modérée réduisant les risques de cokéfaction du catalyseur.

On connaît par le brevet US-A N° 3826737 un procédé de conversion catalytique en lit mobile. Ce procédé est cependant plus paticulièrement adapté à la circulation cocourant du catalyseur et de la charge liquide, cette dernière étant évacuée à la base du réacteur à travers une grille cylindrique disposée à la base d'un cône de décharge du catalyseur et qui soutient le lit catalytique.

Un tel procédé présente l'inconvénient d'un risque d'encrassement de la grille par des grains de catalyseur poussés contre cette grille par la charge liquide évacuée par le fond du réacteur. Il peut alors en résulter une répartition irrégulière des fluides dans le catalyseur, des difficultés d'écoulement du lit catalytique, avec des risques de blocage de certaines zones de ce lit, ainsi qu'un accroissement de l'érosion du catalyseur dû au frottement entre grains bloqués et grains libres du lit catalytique et entre les grains de catalyseur libres et la grille d'évacuation de la charge liquide. L'objet de l'invention est de fournir une technique qui supprime les inconvénients mentionnés ci-dessus.

Cette technique consiste à injecter le liquide et les gaz sous la paroi qui soutient le lit catalytique, par une pluralité d'orifices répartis sur la section du réacteur, conformément à divers agencements qui font l'objet de l'invention.

Plus particulièrement ce résultat est obtenu par un procédé (avec soutirage progressif des particules solides pulvérulentes d'un espace généralement fermé) pour introduire dans ledit espace une charge fluide constituée d'un liquide et d'un gaz (généralement de l'hydrogène) ledit espace généralement fermé ayant sensiblement la forme d'un volume de révolution allongé et sensiblement vertical, les particules solides étant introduites à la partie supérieure de l'enceinte et soutirées progressivement dans la partie inférieure de l'enceinte après avoir cheminé de haut en bas dans ladite enceinte, tandis que la charge fluide est introduite au moins en partie et généralement en continu dans la partie inférieure de ladite enceinte et en est soutirée dans la partie supérieure après avoir cheminé de bas en haut dans ladite enceinte, procédé dans lequel les particules solides sont soutirées progressivement par l'extrémité inférieure d'au moins une zone évasée ayant une forme dépendant de la géométrie du réacteur et en général la forme d'un cône renversé ou d'une pyramide renversée, c'est-à-dire d'un cône ou d'une pyramide dont le sommet est tourné vers le bas, sommet dans lequel est percée une ouverture de taille convenable pour l'évacuation des particules solides, la paroi de ladite zone évasée étant sensiblement et régulièrement discontinue, c'est-à-dire parsemée d'ouvertures régulièrement espacées ayant chacune une taille suffisamment petite pour empêcher les particules solides de passer au travers de ladite paroi mais suffisamment grande pour permettre le passage à travers ces ouvertures d'un courant ascendant de la charge fluide, le procédé étant caractérisé en ce que la charge fluide est injectée dans la partie inférieure de ladite enceinte par au moins une zone de distribution de forme particulière propre à l'invention et située en dessous de ladite paroi. La demande de brevet européen EP-A N° 64459, que l'on cite ici au titre de l'article 54(3) de la Convention sur le brevet européen, décrit notamment une technique d'injection, d'une charge sous la paroi qui soutient un lit catalytique, au moyen de tubes ajourés ou de tubulures verticales. Or, la présente invention met en œuvre d'autres dispositifs. Ainsi, à titre d'exemple, un premier type de zone de distribution est constitué d'une conduite principale qui est par exemple sensiblement horizontale ou verticale lorsqu'elle pénètre à l'intérieur du réacteur, ladite conduite formant éventuellement au moins un coude, son extrémité (ou embout) devenant ensuite sensiblement verticale sous la paroi de la zone évasée qui soutient le lit catalytique. Cet embout se subdivise alors en une pluralité de branches (ou rayons) disposées (type distribution torique et réseau de tube) par exemple en étoile (avec au moins 3 branches ou rayons) chaque banche étant munie de plusieurs orifices judicieusement disposés (regardant la paroi ou disposés à l'opposé ou sur les côtés de la branche) tout le long de la branche et par lesquels le fluide mixte est injecté en vue d'atteindre uniformémemt le lit catalytique, c'est-à-dire en l'irriguant de façon homogène.

L'invention est illustrée d'abord par diverses fig. 1 à 4.

Les fig. 1 et 1A montrent, en coupe axiale et en section droite respectivement, un premier dispositif selon l'invention, avec ici au moins un distributeur en forme dite étoilée.

Les fig. 2 à 4 illustrent différents autres modes de réalisation des moyens d'introduction de la charge fluide dont le but est également d'obtenir la meilleure dispersion gaz-liquide.

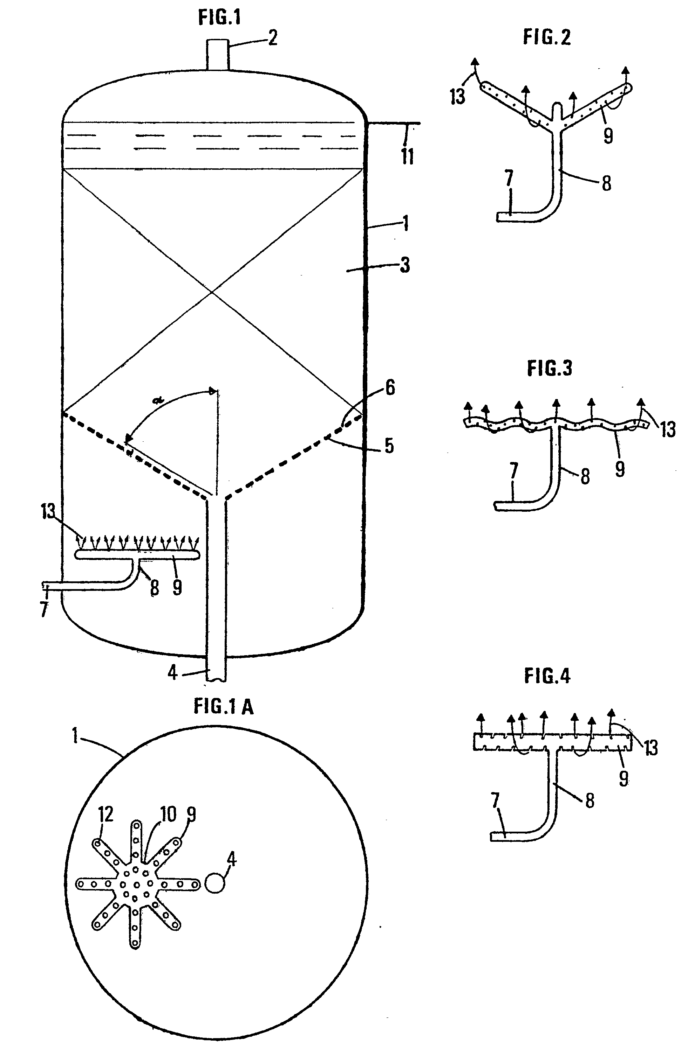

La fig. 1 représente schématiquement un premier mode de réalisation d'un dispositif de traitement catalytique, par exemple en lit fixe ou en lit mobile.

Le réacteur 1, qui peut être de type radial ou axial, comporte à sa partie supérieure des moyens d'introduction progressive de catalyseur (neuf ou régénéré) schématisés par le conduit 2 qui déverse les particules de catalyseur pour alimenter un lit de catalyseur 3 fixe ou mobile.

Le catalyseur s'écoule par gravité dans le réacteur et est évacué progressivement par le conduit 4, à la partie inférieure du réacteur 1, par l'intermédiaire d'un entonnoir de soutirage 5 qui, sur la figure, se présente sous l'aspect d'une grille. Cet entonnoir, ici en forme de cône renversé, est donc muni d'ouvertures telles que 6, formées par les espaces ajourés de la grille 5 qui laissent passer la charge liquide et gazeuse injectée en dessous du niveau de la grille ou entonnoir 5 par une conduite telle que 7, mais ne laissent pas passer les particules du catalyseur.

L'angle $\alpha$ que fait l'axe du cône (ou l'axe de la pyramide si l'entonnoir a cette forme) avec l'une des génératrices du cône (ou l'une des arêtes de la pyramide) est compris généralement entre 10 et 80°, de préférence entre 20 et 50°.

La charge fluide, constituée de deux phases (liquide et gaz), est donc introduite à la partie inférieure du réacteur 1 par au moins une zone de distribution comprenant une rampe de distribution 7 (horizontale, oblique ou verticale ou disposée de toute façon adéquate, par exemple verticale dans certains réacteurs industriels) qui alimente au moins une canne verticale d'injection 8 d'où rayonnent des tubes 9 (ou des branches) disposés en étoile ainsi que le montre la fig. 1A, qui est une section droite du réacteur 1.

Sur la fig. 1A, chaque branche 9 de l'étoile 10 est munie d'orifices 12 (trous ou fentes ou autres perforations du même type) pour l'injection de la charge fluide à l'intérieur de la zone de réaction.

La charge fluide, formée de deux phases (liquide et gaz) remonte dans le réacteur à contre-courant du catalyseur avant d'être évacuée à la partie supérieure du réacteur par l'intermédiaire de moyens de collecte et d'évacuation schématisés par la conduite 11, ayant la forme, par exemple, d'un râteau constitué de tubes collecteurs raccordés à un conduit d'évacuation.

Dans le cas de la fig. 1, où le distributeur (ou les distributeurs, s'il y en a plusieurs), représenté sur la figure par l'ensemble des agencements 7, 8 et 9, a la forme d'une étoile sensiblement horizontale; les divers orifices tels que 12 (voir fig. 1A) des diverses branches 9 sont judicieusement calibrés et répartis (en dessous, en haut et sur les côtés de façon à assurer la meilleure dispersion du gaz et du liquide pour une large fourchette de débit).

Sur les fig. 2, 3 et 4, on distingue une rampe ici horizontale 7, au moins un embout (ou canne) 8 verticale et les branches 9 de formes variées. Ces branches (dont l'inclinaison peut être par exemple comprise entre 0 et 60° par rapport à l'horizontale) représentent soit une étoile à branches inclinées dans la fig. 2 (ou en forme de baleine de parapluie retourné), soit une étoile aux branches en forme ondulée dans la fig. 3. La fig. 4, montre les positions possibles des orifices tels que 12 sur une branche 9 dans le but d'envoyer dans de multiples directions (schématisées par les flèches 13 sur toutes les fig. 1, 2, 3 et 4) les gouttelettes de fluide en vue de les faire pénétrer dans la masse catalytique de façon homogène en tout point de la surface de la grille ou paroi 5, par les ouvertures 6 sur la fig. 1.

Les étoiles des distributeurs peuvent comporter 3, 4, 5, 6, 7, 8, etc., ou plus, de branches ou rayons.

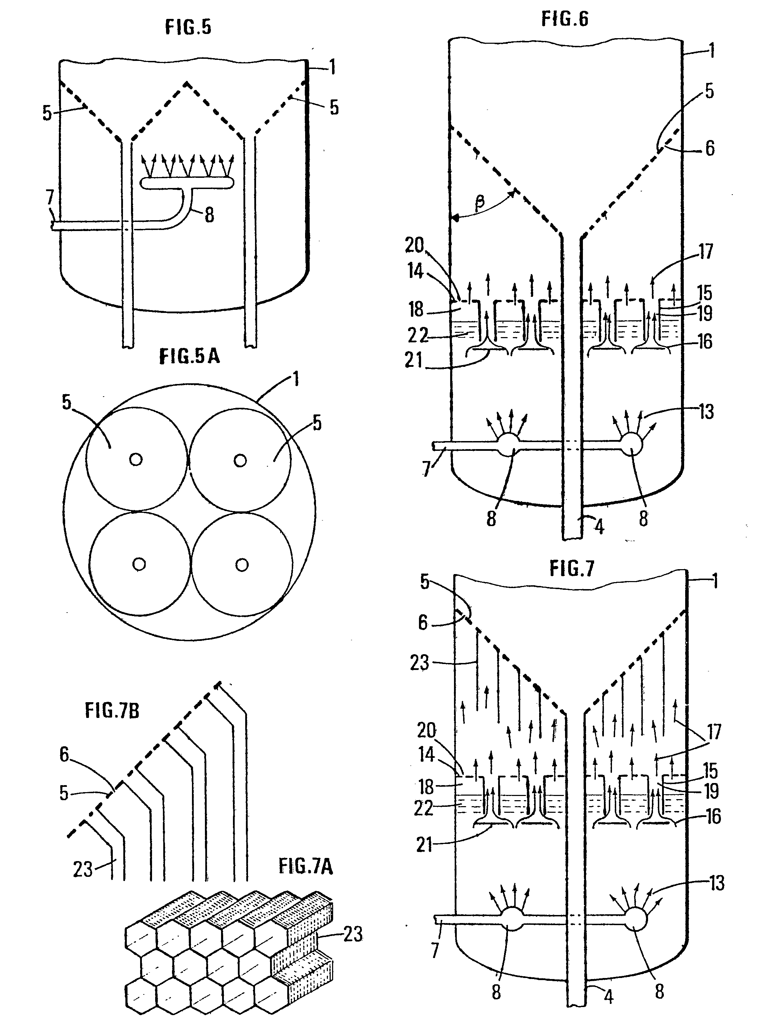

Les fig. 5 et 5A illustrent schématiquement un mode de réalisation dans lequel l'évacuation du catalyseur s'effectue par plusieurs entonnoirs de soutirage. On a représenté, sur ces fig. 5 et 5A, uniquement le fond d'un réacteur 1 et les entonnoirs tels que 5 et sur la fig. 5, une seule canne et une seule rampe 7. La figure en coupe 5A montre ainsi 4 entonnoirs, deux d'entre eux seulement étant visibles sur la fig. 5, en coupe axiale.

Le nombre des entonnoirs de soutirage 4 dépend de la géométrie du réacteur, des contraintes mécaniques de construction et de l'uniformité des trajets souhaitée pour les particules catalytiques qui traversent les divers secteurs du réacteur.

Un tel mode de soutirage permet de régler facilement le débit de catalyseur, indépendamment de celui de la charge fluide et permet de réaliser à volonté (en lit mobile) un soutirage continu ou discontinu (c'est-à-dire périodique) du catalyseur.

Un autre perfectionnement du procédé se caractérise ainsi: le fluide mixte injecté par une zone de distribution (étoilée ou non) se dirige vers l'entonnoir ou les entonnoirs qui soutiennent le lit catalytique en rencontrant tout d'abord avant de parvenir à ce ou ces entonnoirs, un espace 18 (fig. 6) dont la partie supérieure est munie d'orifices suffisamment grands pour laisser passer la majeure partie de la phase gazeuse du fluide mixte mais suffisamment petits pour empêcher le passage de la majeure partie de la phase liquide du fluide mixte, ledit espace étant traversé par des parois verticales qui délimitent des ouvertures à travers ledit espace, de sorte que le fluide mixte, à l'intérieur dudit espace, se divise d'une part en phase gazeuse et, d'autre part, en phase liquide, la majeure partie de la phase gazeuse atteignant un entonnoir à travers lesdits orifices de ladite partie supérieure de l'espace, la majeure partie de la phase liquide atteignant un entonnoir après avoir cheminé à travers lesdites ouvertures délimitées par lesdites parois verticales qui traversent ledit espace, et après s'être à nouveau mélangée (au-dessus desdits orifices de ladite partie supérieure de l'espace) avec la majeure partie de la phase gazeuse en vue de créer des contacts homogènes et réguliers à tous les niveaux du lit catalytique et d'assurer une meilleure dispersion du gaz et du liquide pour une large fourchette de débit.

Ce perfectionnement de l'appareillage permet donc d'obtenir une dispersion encore plus régulière du fluide à travers le lit catalytique pour une plus grande fourchette de débit. Ce perfectionnement illustré par la fig. 6 consiste à disposer, dans le réacteur 1, entre la grille 5, qui supporte le lit catalytique (soutirage du catalyseur par le conduit 4) et les rampes telles que 7, des zones de distribution de forme étoilée ou non (que l'on a schématisées par les disques 8), une grille supplémentaire 14 (ou tout autre moyen équivalent) dont les perforations 20 sont suffisamment petites pour ne pas laisser passer la majeure partie de la phase liquide du fluide (introduit par les zones de distribution 8), ne laissant passer ainsi que la majeure partie de la phase gazeuse du fluide. Des parois ou des barrières continues 15 (c'est-à-dire non perforées ou non ajourées) et sensiblement verticales, sous forme de cheminées par exemple, sont disposées, d'une façon généralement régulière sous cette grille 14 en prenant appui sur cette grille 14 (et dont les extrémités inférieures sont situées suffisamment bas dans le réacteur, généralement à un niveau supérieur à celui des zones de distribution 8) et délimitent ainsi un compartiment 18 et des cheminées 19: la fraction gazeuse du fluide atteint en majeure partie (flèches 17) la grille 5 à travers le compartiment 18 et les orifices 20, après avoir traversé des zones 22 d'accumulation et de séparation d'une phase liquide et d'une phase gazeuse. Des plateaux ou les chicanes 21 sont disposés sous les extrémétis inférieures des cheminées 19 (et au-dessus du niveau des zones de distribution) de façon à ce que le fluide mixte injecté par les zones de distribution 8 et dont le trajet est matérialisé par les flèches 13, s'accumule dans les compartiments 18 en créant des amas liquides et gazeux 22, la majeure partie du liquide s'engouffrant à travers les cheminées 19 (chemin matérialisé par les flèches 16). Le perfectionnement décrit ci-dessus fait donc office de mixeur et de dispersion de la charge fluide.

Les dispositifs de la fig. 6 peuvent être encore améliorés. On a en effet remarqué que les gaz, dont le trajet est matérialisé par les flèches 17, ont tendance à se diriger et à s'accumuler dans les angles β délimités par les parois de l'entonnoir ou des entonnoirs 5 et la paroi du réacteur 1. Pour éviter la migration du gaz sous la partie supérieure de l'entonnoir et améliorer ainsi la répartition du gaz et du liquide dans toute la section du lit, on fait cheminer la phase gazeuse et la phase liquide (en provenance des orifices de la partie supérieure desdits espaces) à travers une pluralité de zones allongées non communicantes parallèles et sensiblement verticales ou obliques ou en partie verticales et en partie obliques qui ainsi obligent les particules gazeuses à emprunter un cheminement contrôlé sous l'entonnoir ou sous les entonnoirs. La fig. 7 illustre ce perfectionnement: on y retrouve tous les accessoires de la fig. 6 et en outre, on y a représenté une pluralité de zones allongées verticales séparées par des barrières verticales 23. Sur la partie droite de la fig. 7, les extrémités inférieures de ces barrières sont toutes au même niveau; ces extrémités sont à des niveaux différents sur la partie gauche de la fig. 7. La longueur des barrières et leur niveau dépendent essentiellement de la géométrie des zones de distribution. La fig. 7A montre, à titre d'exemple non limitatif, un mode de construction de ces barrières 23 qui ici sont des chambres ou des tubes de type alvéolé ou en nid d'abeilles. On dispose la partie supérieure de ces tubes au voisinage immédiat de la grille-entonnoir 5 et de préférence au contact de cette grille-entonnoir. La fig. 7B illustre des barrières 23 qui sont verticales dans leur partie inférieure et obliques au voisinage de la grille 5 qui supporte le réacteur.

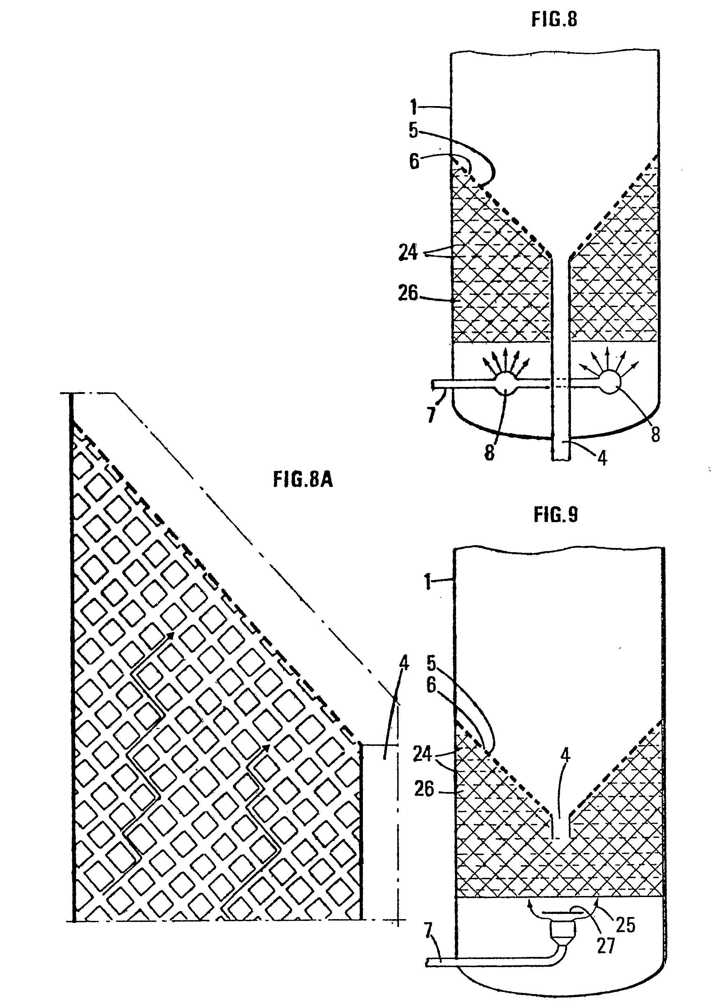

Un autre perfectionnement du procédé et de l'appareillage conformes à l'invention et faisant également office de mixeur de la charge fluide, est illustré par la fig. 8 ou la fig. 9 (sur la fig. 9, on n'a pas représenté la conduite 4 de soutirage du catalyseur). Ce procédé consiste à faire cheminer le fluide mixte, injecté par une zone de distribution de forme étoilée ou non, à travers une pluralité de couches alvéolées, juxtaposées les unes aux autres et disposées entre la ou les zones de distribution et l'entonnoir ou les entonnoirs qui soutiennent le lit catalytique, en vue de provoquer une répartition régulière et homogène de la charge dans le lit catalytique et d'assurer la meilleure dispersion du gaz et du liquide pour une large fourchette du débit.

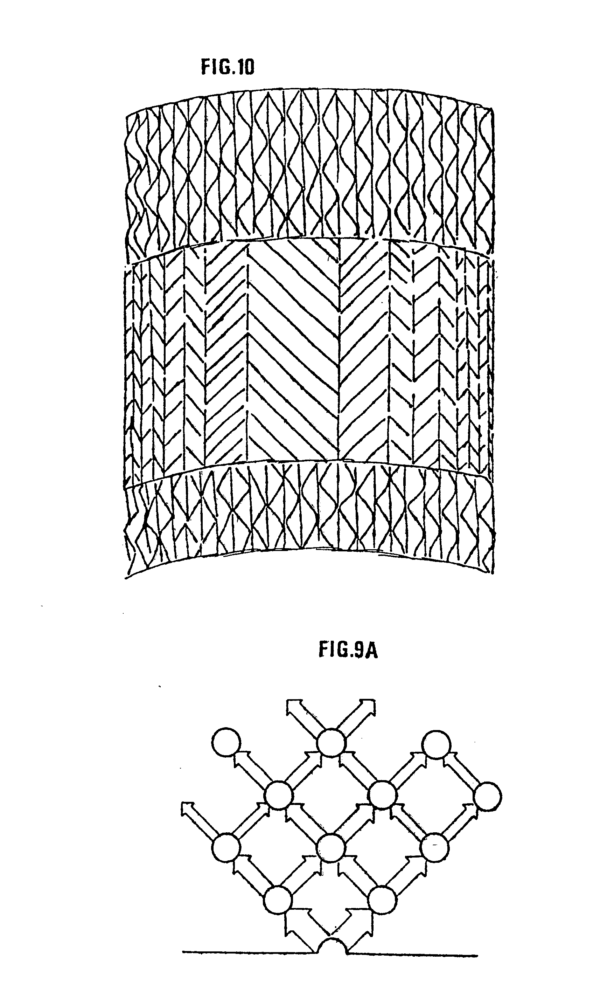

En se référant à la fig. 8 ou 9, on fait circuler le fluide injecté dans le réacteur 1, vers la grille 5 et ses perforations 6, par le système de distribution 7 et 8, de forme étoilée ou non (et par exemple dans la fig. 9, de forme «brise-jet», c'est-à-dire une conduite d'injection à pluralité d'orifices surmontée d'au moins une plaquette ou plateau 27 qui brise le jet en pluie, comme l'indiquent les flèches 25) à travers les alvéoles d'une espèce de moule à gaufres 26, lui-même constitué d'une série d'éléments 24 ayant la forme de plaques ou couches alvéolées de formes diverses (cylindriques ou carrées, etc., par exemple) dépendant de la géométrie du réacteur et serrées les unes contres les autres. Généralement, chaque élément a la forme d'une plaque rugueuse ou striée ou cannelée (mot anglais usuel: «corrugations») de nervures (comme le montre la fig. 10) et les plaques, identiques ou différentes, sont agencées pour créer des cheminements complexes (illustrés par les fig. 8A et 9A) et continus depuis la partie inférieure jusqu'à la partie supérieure, permettant au fluide mixte d'émerger à la partie supérieure par une multitude d'orifices et d'accéder ainsi régulièrement sur toute la section du lit catalytique, à travers la grille-entonnoir 5.

Dans chaque élément ou plaque, ainsi que le montre la fig. 9A, chaque chemin ou trajet du fluide se divise plusieurs fois en deux nouveaux chemins, chacun de ces nouveaux chemins se divisant à son tour en d'autres cheminements de fluide.

Les plaques dont l'aspect général est visible sur la fig. 10 sont fabriquées en un métal ou en un alliage ou en une matière plastique adéquats. On les trouve dans le commerce («Sulzer», marque déposée).

Un autre perfectionnement du procédé et de l'appareillage selon l'invention consiste à utiliser au moins une zone de distribution constituée:

a) d'une conduite quelconque, par exemple verticale ou horizontale, par laquelle arrive le fluide mixte, et

b) d'une enceinte disposée sous la zone évasée, la partie inférieure de cette enceinte ayant la forme d'une chambre allongée et verticale ayant sensiblement le même axe que celui de ladite zone évasée, la partie supérieure de ladite enceinte ayant une forme de zone évasée se prolongeant sous toute ladite zone évasée et parallèle à cette zone, formant ainsi une enveloppe autour de l'entonnoir.

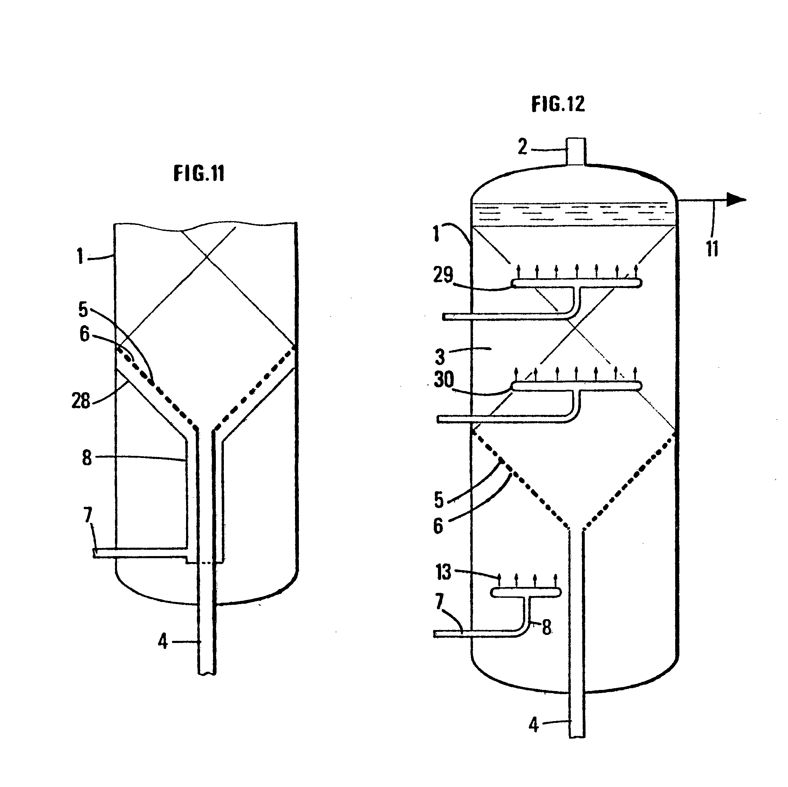

La fig. 11 illustre une réalisation de ce type de zone ou boîte de distribution. Tout se passe comme si le fluide était introduit dans le réacteur 1 à travers une espèce de double paroi intégrée à la grille-entonnoir. La charge est introduite par une rampe classique 7 (qui peut être agencée de toute façon adéquate, horizontale ou verticale le plus souvent dans certains réacteurs industriels); la conduite verticale est un tube 8 de même axe que celui de l'entonnoir-grille 5, ce tube s'ouvrant à sa partie supérieure de façon à former un deuxième entonnoir 28 disposé au voisinage de l'entonnoir perforé 5 et sous cet entonnoir 5.

Des promoteurs internes de turbulence, non représentés sur la figure, permettent à la charge d'atteindre toute la section du lit catalytique à travers la paroi perforée 5 et d'obtenir une bonne dispersion du liquide et du gaz à l'entrée du lit catalytique.

Dans le procédé et les appareils conformes à l'invention et décrits ci-dessus, il est également possible, en vue de contrôler l'exothermicité de la réaction dans le lit catalytique, d'effectuer des quenches (trempes ou refroidissement) en général à l'aide d'hydrogène froid et/ou encore à l'aide d'un liquide judicieusement choisi, par exemple un liquide de même nature que la charge, par exemple à l'entrée ou à la sortie de la zone de réaction ou encore entre les lits catalytiques (car les procédés et appareillages décrits restent valables pour des lits catalytiques superposés) mais également au milieu d'un ou du lit catalytique lui-même et dans ce dernier cas, il s'est avéré judicieux d'injecter le fluide utilisé pour réaliser un tel quench (hydrogène froid par exemple ou liquide froid) à l'aide d'au moins une zone de distribution de forme étoilée du type décrit précédemment pour les fig. 1 à 4 ou en forme de losanges ou de cylindres judicieusement espacés de façon à accroître la turbulence et donc l'efficacité du quench entre ces distributeurs en losanges ou cylindriques. On pourra aussi utiliser toute autre forme ne s'opposant pas au mouvement du catalyseur. La fig. 12, sur laquelle on reconnaît une zone étoilée (7 et 8) pour injecter la charge (flèche 13) à travers un entonnoir-grille 5 dans le lit 3, comporte ainsi deux zones étoilées 29 et 30 pour effectuer des quenches. L'effluent est soutiré par la ligne 11.

## Revendications

1. Procédé d'hydrotraitement ou d'hydroviscoréduction ou d'hydroconversion d'hydrocarbures en présence d'un catalyseur solide utilisé sous la forme d'un lit fixe ou mobile de particules catalytiques, le procédé étant effectué dans une zone de réaction ayant sensiblement la forme d'un volume de révolution allongé et sensiblement vertical, les particules solides étant introduites à la partie supérieure de la zone de réaction et soutirées progressivement, après avoir cheminé de haut en bas dans ladite zone par l'extrémité inférieure d'une zone évasée ayant la forme d'un cône renversé ou d'une pyramide renversée, c'est-à-dire d'un cône ou d'une pyramide dont le sommet est tourné vers le bas, sommet dans lequel est percée au moins une ouverture de taille nécessaire à l'évacuation des particules de catalyseur, les parois de ladite zone évasée étant sensiblement et régulièrement discontinues, c'est-à-dire étant parsemées d'ouvertures régulièrement espacées dont la taille est suffisamment petite pour empêcher les particules de catalyseur de passer au travers desdites parois mais suffisamment grande pour permettre le passage, à travers ces ouvertures, d'un courant ascendant d'un fluide mixte, le procédé étant caractérisé en ce que ledit fluide, constitué de la charge liquide d'hydrocarbures à traiter et d'hydrogène gazeux, est introduit au moyen d'au moins une zone de distribution disposée sous la ou les zones évasées qui soutiennent le lit catalytique, chaque zone de distribution étant constituée d'une conduite principale et comportant au moins une extrémité située à l'intérieur de la zone de réaction, ladite extrémité de ladite conduite (à l'intérieur de la zone de réaction et sous ladite zone évasée) étant sensiblement verticale et se subdivisant en une pluralité de branches disposées en forme d'étoile, chaque branche étant munie de plusieurs orifices par lesquels est injecté le fluide.

2. Procédé selon la revendication 1, dans lequel les branches en forme étoilée sont sensiblement horizontales.

3. Procédé selon la revendication 1, dans lequel lesdites branches sont inclinées, l'angle d'inclinaison étant compris entre 0 et 40° environ par rapport à l'horizontale.

4. Procédé selon la revendication 1, dans lequel lesdites branches ont une forme ondulée.

5. Procédé d'hydrotraitement ou d'hydroviscoréduction ou d'hydroconversion d'hydrocarbures en présence d'un catalyseur solide utilisé sous la forme d'un lit fixe ou mobile de particules catalytiques, le procédé étant effectué dans une zone de réaction ayant sensiblement la forme d'un volume de révolution allongé et sensiblement vertical, les particules solides étant introduites à la partie supérieure de la zone de réaction et soutirées progressivement, après avoir cheminé de haut en bas dans ladite zone, par l'extrémité inférieure d'une zone évasée ayant la forme d'un cône renversé ou d'une pyramide renversée, c'est-à-dire d'un cône ou d'une pyramide dont le sommet est tourné vers le bas, sommet dans lequel est percée au moins une ouverture de taille nécessaire à l'évacuation des particules de catalyseur, les parois de ladite zone évasée étant sensiblement et régulièrement discontinues c'est-à-dire étant parsemées d'ouvertures régulièrement espacées dont la taille est suffisamment petite pour empêcher les particules de catalyseur de passer au travers desdites parois mais suffisamment grande pour permettre le passage, à travers ces ouvertures d'un courant ascendant d'un fluide mixte, le procédé étant caractérisé en ce que ledit fluide, constitué de la charge liquide d'hydrocarbures à traiter et d'hydrogène gazeux, introduit au moyen d'au moins une zone de distribution disposée sous la ou les zones évasées qui soutiennent le lit catalytique, se dirige ensuite vers la ou les zones évasées qui soutiennent le lit catalytique en rencontrant tout d'abord, avant de parvenir à une zone évasée, un espace dont la partie supérieure est munie d'orifices suffisamment grands pour laisser passer la majeure partie de la phase gazeuse du fluide mais suffisamment petits pour empêcher le passage de la majeure partie de la phase liquide du fluide, ledit espace étant traversé par des parois verticales qui délimitent des ouvertures à travers ledit espace, de sorte que le fluide, à l'intérieur dudit espace, se divise d'une part en phase gazeuse et d'autre part en phase liquide, la majeure partie de la phase gazeuse atteignant ladite paroi à travers lesdits orifices de ladite partie supérieure dudit espace, la majeure partie de la phase liquide atteignant une zone évasée après avoir cheminé à travers lesdites parois qui délimitent ledit espace et après s'être à nouveau mélangée (au-dessus desdits orifices de ladite partie supérieure dudit espace) avec la majeure partie de la phase gazeuse.

6. Procédé selon la revendication 5, dans lequel en outre, la phase gazeuse et la phase liquide cheminent entre la partie supérieure dudit espace et une zone évasée, à travers une pluralité de zones allongées parallèles non communicantes et sensiblement verticales ou obliques ou en partie verticales et en partie obliques.

7. Procédé d'hydrotraitement ou d'hydroviscoréduction ou d'hydroconversion d'hydrocarbures en présence d'un catalyseur solide utilisé sous la forme d'un lit fixe ou mobile de particules catalytiques, le procédé étant effectué dans une zone de réaction ayant sensiblement la forme d'un volume de révolution allongé et sensiblement vertical, les particules solides étant introduites à la partie supérieure de la zone de réaction et soutirées progressivement, après avoir cheminé de haut en bas dans ladite zone, par l'extrémité inférieure d'une zone évasée ayant la forme d'un cône renversé ou d'une pyramide renversée, c'est-à-dire d'un cône ou d'une pyramide dont le sommet est tourné vers le bas, sommet dans lequel est percée au moins une ouverture de taille nécessaire à l'évacuation des particules de catalyseur, les parois de ladite zone évasée étant sensiblement et régulièrement discontinues, c'est-à-dire étant parsemées d'ouvertures régulièrement espacées dont la taille est suffisamment petite pour empêcher les particules de catalyseur de passer au travers desdites parois mais suffisamment grande pour permettre le passage à travers ces ouvertures, d'un fluide mixte, le procédé étant caractérisé en ce que ledit fluide, constitué de la charge liquide d'hydrocarbures à traiter et d'hydrogène gazeux, introduit au moyen d'au moins une zone de distribution disposée sous la ou les zones évasées qui soutiennent le lit catalytique, chemine ensuite à travers une pluralité de couches alvéolées disposées sur la section de la zone de réaction et disposées entre d'une part la ou les zones de distribution et d'autre part une zone évasée qui soutient le lit catalytique.

8. Procédé d'hydrotraitement ou d'hydroviscoréduction ou d'hydroconversion d'hydrocarbures en présence d'un catalyseur solide utilisé sous la forme d'un lit fixe ou mobile de particules catalytiques, le procédé étant effectué dans une zone de réaction ayant sensiblement la forme d'un volume de révolution allongé et sensiblement vertical, les particules solides étant introduites à la partie supérieure de la zone de réaction et soutirées progressivement, après avoir cheminé de haut en bas dans ladite zone, par l'extrémité inférieure d'une zone évasée ayant la forme d'un cône renversé ou d'une pyramide renversée, c'est-à-dire d'un cône ou d'une pyramide dont le sommet est tourné vers le bas, sommet dans lequel est percée au moins une ouverture de taille nécessaire à l'évacuation des particules de catalyseur, les parois de ladite zone évasée étant sensiblement et régulièrement discontinues, c'est-à-dire étant parsemées d'ouvertures régulièrement espacées dont la taille est suffisamment petite pour empêcher les particules de catalyseur de passer au travers desdites parois mais suffisamment grande pour permettre le passage, à travers ces ouvertures, d'un courant ascendant d'un fluide mixte, le procédé étant caractérisé en ce que ledit fluide, constitué de la charge liquide d'hydrocarbures à traiter et d'hydrogène gazeux, est introduit dans la zone de réaction en cheminant à travers (a) une conduite qui apporte le fluide à l'intérieur de la zone de réaction, dans la partie inférieure de cette zone de réaction, et (b) à travers une enceinte disposée sous une zone dite évasée, la partie inférieure de cette enceinte ayant la forme d'une chambre allongée et verticale ayant sensiblement le même axe que celui de ladite zone évasée, et la partie supérieure de ladite enceinte ayant une forme de zone également évasée se prolongeant ainsi sous toute ladite zone évasée, parallèlement à cette zone de façon à ce que le fluide puisse accéder dans le lit catalytique en tout point de ladite zone évasée.

9. Procédé selon l'une des revendications 1 à 8, dans lequel au moins un quench (refroidissement) à l'aide d'un fluide gazeux ou liquide est réalisé à l'intérieur du lit catalytique fixe ou mobile, le fluide de quench étant introduit à l'aide d'une zone de distribution constituée d'une conduite principale dont l'extrémité à l'intérieur de la zone de réaction est sensiblement verticale et se subdivise en une pluralité de branches disposées en forme d'étoile, chaque branche étant munie de plusieurs orifices régulièrement agencés le long de chaque branche, orifices par lesquels est injecté le fluide à l'intérieur du lit catalytique.

10. Appareil pour mettre en œuvre le procédé selon la revendication 1, comportant un réacteur (1), des moyens (2) d'introduction de catalyseur frais à la partie supérieure du réacteur, des moyens d'évacuation du catalyseur usé à la partie inférieure de ce réacteur, ces moyens d'évacuation comportant au moins un entonnoir (5) de soutirage, de forme conique ou pyramidale, dont le sommet pointe vers le bas, sommet autour duquel est aménagée une ouverture (4) suffisamment grande pour évacuer le catalyseur usé hors du réacteur, des moyens (7) d'introduction d'un fluide à la partie inférieure du réacteur et des moyens (11) d'évacuation du fluide traité à la partie supérieure du réacteur, la paroi dudit entonnoir (5) de soutirage étant pourvue de perforations ou de fentes (6) sensiblement réparties sur toute la hauteur de cet entonnoir, la taille desdites perforations étant suffisamemnt petite pour empêcher le passage des particules de catalyseur à travers ladite paroi mais suffisamment grande pour permettre le passage à travers ladite paroi d'un courant ascendant de la charge fluide, l'appareil étant caractérisé en ce qu'il comporte au moins une zone de distribution d'un fluide, constituée d'un gaz et d'un liquide, ladite zone comportant une tubulure (7) qui après avoir pénétré à l'intérieur du réacteur se termine par au moins une extrémité, ladite extrémité (8) (ou embout), située sous l'entonnoir du soutirage, étant sensiblement verticale et éclatant en un faisceau d'au moins 3 branches (9) disposées en forme d'étoile ou dispositif équivalent, chaque branche étant munie de perforations ou de fentes réparties sur la longueur de la branche, par lesquelles est injecté ledit fluide.

11. Appareil selon la revendication 10, dans lequel les branches sont sensiblement horizontales.

12. Appareil selon la revendication 10, dans lequel les branches sont inclinées, l'angle d'inclinaison étant compris entre 0 et 60° par rapport à l'horizontale.

13. Appareil selon la revendication 10, dans lequel les branches ont une forme ondulée.

14. Appareil selon la revendication 10, dans lequel les perforations ou fentes sont disposées en dessous, au-dessus et sur les côtés des branches.

15. Appareil pour mettre en œuvre le procédé selon la revendication 5, comportant un réacteur (1) (fig. 6), des moyens d'introduction de catalyseur frais à la partie supérieure du réacteur, des moyens d'évacuation du catalyseur usé à la partie inférieure de ce réacteur, ces moyens d'évacuation comportant au moins un entonnoir (5) de soutirage, de forme conique ou pyramidale, dont le sommet pointe vers le bas, sommet autour duquel est aménagée une ouverture (4) suffisamment grande pour évacuer le catalyseur usé hors du réacteur, des moyens d'introduction d'un fluide constitué d'un liquide et d'un gaz à la partie inférieure du réacteur, sous la paroi dudit entonnoir (5) définie ci-dessous, et des moyens d'évacuation du fluide à la partie supérieure du réacteur, la paroi dudit entonnoir (5) de soutirage étant pourvue de perforations ou de fentes (6) sensiblement réparties sur toute la hauteur de cet entonnoir, la taille desdites perforations étant suffisamment petite pour empêcher le passage des particules de catalyseur à travers ladite paroi mais suffisamment grande pour permettre le passge à travers ladite paroi d'un courant ascendant de la charge fluide, l'appareil étant caractérisé en ce que l'on dispose entre l'entonnoir (5) et les moyens d'introduction du fluide: (α) une grille (14) (ou tout moyen équivalent) dont les perforations (20) sont suffisamment petites pou empêcher le passage de la majeure partie de la phase liquide du fluide, ne laissant le passage qu'à la majeure partie de la phase gazeuse du fluide, (β) des parois ou des barrières (15) continues et sensiblement verticales, disposées sous la grille (14) et qui prennent appui sur la grille (14) et dont les extrémités inférieures sont situées dans le réacteur à un niveau généralement supérieur à celui des moyens (7) et (8) d'introduction du fluide, ces barrières ou parois délimitant ainsi un compartiment (18) et des cheminées (19), et (γ) des plateaux ou des chicanes (21) disposés sous les extrémités inférieures des cheminées.

16. Appareil selon la revendication 15, renfermant en outre (fig. 7) une pluralité de chambres allongées (23), parallèles, non communicantes et sensiblement verticales ou obliques, ou en partie verticales et en partie obliques, disposées entre la grille (14) et l'entonnoir (5) (ou les entonnoirs (5)).

17. Appareil pour mettre en œuvre le procédé selon la revendication 7, comportant un réacteur (1) (fig. 9), des moyens d'introduction de catalyseur frais à la partie supérieure du réacteur, des moyens d'évacuation du catalyseur usé à la partie inférieure de ce réacteur, ces moyens d'évacuation comportant au moins un entonnoir (5) de soutirage, de forme conique ou pyramidale, dont le sommet pointe vers le bas, sommet autour duquel est aménagée une ouverture (4) suffisamment grande pour évacuer le catalyseur usé hors du réacteur, la paroi dudit entonnoir (5) de soutirage étant pourvue de perforations ou de fentes (6) sensiblement réparties sur toute la hauteur de cet entonnoir, la taille desdites perforations étant suffisamment petite pour empêcher le passage des particules de catalyseur à travers ladite paroi mais suffisamment grande pour permettre le passage à travers ladite paroi d'un courant ascendant d'un fluide et des moyens d'introduction d'un fluide à la partie inférieure du réacteur et des moyens d'évacuation du fluide à la partie supérieure du réacteur, l'appareil étant caractérisé en ce qu'il comporte disposées entre l'entonnoir (5) et les moyens d'introduction du fluide, plusieurs plaques (24) serrées les unes sur les autres, chaque plaque ayant une forme rugueuse ou striée (c'est-à-dire alvéolée) de façon à ce que l'ensemble (26) desdites plaques constitue une multitude d'espaces alvéolés sensiblement continus permettant un cheminement dudit fluide de bas en haut à travers l'ensemble des plaques.

18. Appareil pour mettre en œuvre le procédé selon la revendication 8, comportant (fig. 11) un réacteur (1), des moyens d'introduction de catalyseur frais à la partie supérieure du réacteur, des moyens d'évacuation du catalyseur usé à la partie inférieure de ce réacteur, ces moyens d'évacuation comportant au moins un entonnoir (5) de soutirage, de forme conique ou pyramidale, dont le sommet pointe vers le bas, sommet autour duquel est aménagée une ouverture (4) suffisamment grande pour évacuer le catalyseur usé hors du réacteur, la paroi dudit entonnoir (5) de soutirage étant pourvue de perforations ou de fentes (6) sensiblement réparties sur toute la hauteur de cet entonnoir, la taille desdites perforations étant suffisamment petite pour empêcher le passage des particules de catalyseur à travers ladite paroi mais suffisamment grande pour permettre le passage à travers ladite paroi d'un courant ascendant d'un fluide, des moyens d'introduction d'un fluide à la partie inférieure du réacteur et des moyens d'évacuation du fluide traité à la partie supérieure du réacteur, l'appareil étant caractérisé en ce que les moyens d'introduction du fluide sont constitués d'une zone de distribution comportant (a) une tubulure (7) de pénétration dans le réacteur 1, et (b) une enveloppe formant à sa partie supérieure une double paroi avec au moins un entonnoir de soutirage (5), cette enveloppe comportant à sa partie inférieure un tube allongé vertical (8) ayant le même axe que l'entonnoir-grille (5) et à sa partie supérieure un entonnoir (28) disposé sous l'entonnoir-grille (5).

19. Appareil selon l'une des revendications 10 à 18, renfermant en outre, au-dessus de l'entonnoir ou des entonnoirs (5), au moins une zone de distribution, ladite zone (destinée à assurer des quenches) comportant une tublure qui pénètre à l'intérieur du réacteur, au-dessus de la paroi dudit entonnoir et dont l'extrémité (ou embout) est sensiblement verticale et éclate en faisceau d'au moins 3 branches disposées en étoile, chaque branche étant munie de perforations ou de fentes, réparties sur toute la longueur de la branche.

**Patentansprüche**

1. Verfahren zur Wasserstoffbehandlung oder Wasserstoffviskoreduktion oder Wasserstoffumwandlung von Kohlenwasserstoffen in Anwesenheit eines festen Katalysators, der in Form eines festen oder beweglichen Bettes aus katalytischen Partikeln benützt wird, wobei das Verfahren in einer Reaktionszone von im wesentlichen der Gestalt eines länglichen und im wesentlichen vertikalen Umdrehungsvolumens durchgeführt wird, wobei die Feststoffpartikel im oberen Teil der Reaktionszone eingeführt werden und allmählich, nachdem sie diese Zone von oben nach unten durchwandert haben, über das untere Ende einer aufgeweiteten Zone von der Gestalt eines umgekehrten Kegels oder einer umgekehrten Pyramide abgezogen werden, d. h. eines Kegels oder einer Pyramide, deren Spitze nach unten weist, wobei diese Spitze von wenigstens einer Öffnung einer Abmessung durchbohrt ist, die zum Abführen der Katalysatorpartikel notwendig ist, wobei die Wandungen dieser aufgeweiteten Zone im wesentlichen und regelmässig diskontinuierlich ausgebildet, d. h. mit Öffnungen besetzt sind, die regelmässig verteilt sind und deren Abmessung ausreichend klein ist, um die Katalysatorpartikel daran zu hindern, durch diese Wände zu treten, jedoch ausreichend gross ist, um den Durchgang, durch diese Öffnungen, eines aufsteigenden Stroms eines Mischfluids zuzulassen, dadurch gekennzeichnet, dass dieses Fluid, das aus der flüssigen Charge aus zu behandelnden Kohlenwasserstoffen und gasförmigen Wasserstoff besteht, mittels wenigstens einer Verteilerzone eingeführt wird, die unter der oder den aufgeweiteten Zonen, die das katalytische Bett stützen, angeordnet ist, dass jede Verteilerzone gebildet wird durch eine Hauptleitung und wenigstens ein Ende, das sich im Inneren der Reaktionszone befindet, umfasst, wobei das Ende dieser Leitung (im Inneren der Reaktionszone und unter der aufgeweiteten Zone) im wesentlichen vertikal ist und sich in eine Vielzahl von sternförmig angeordneten Zweigleitungen unterteilt, wobei jede Zweigleitung mit mehreren Öffnungen, über die das Fluid eingeblasen oder eingespritzt wird, versehen ist.

2. Verfahren nach Anspruch 1, dadurch gekennzeichnet, dass die sternförmigen Zweigleitungen im wesentlichen horizontal ausgebildet sind.

3. Verfahren nach Anspruch 1, dadurch gekennzeichnet, das die Zweigleitungen geneigt sind, wobei der Neigungswinkel zwischen 0 und 40° etwa, bezogen auf die Horizontale, beträgt.

4. Verfahren nach Anspruch 1, dadurch gekennzeichnet, dass die Zweigleitungen gewellte Gestalt haben.

5. Verfahren zur Wasserstoffbehandlung oder Wasserstoffviskoreduktion oder Wasserstoffumwandlung von Kohlenwasserstoffen in Anwesenheit eines festen Katalysators, der in Form eines festen oder beweglichen Betts aus katalytischen Partikeln verwendet wird und wobei das Verfahren in einer Reaktionszone durchgeführt wird, deren Gestalt die eines länglichen und im wesentlichen vertikalen Umdrehungsvolumens ist, wobei die Feststoffpartikel im oberen Teil der Reaktionszone eingeführt und allmählich, nachdem sie diese Zone von oben nach unten durchwandert haben, über das untere Ende einer sich erweiternden Zone abgezogen werden, die die Gestalt eines umgekehrten Kegels oder einer umgekehrten Pyramide hat, d. h. eines Kegels oder einer Pyramide, deren Spitze nach unten weist und wobei in die Spitze wenigstens eine Öffnung einer Abmessung gebohrt ist, die notwendig zum Abziehen der Katalysatorpartikel ist, wobei die Wände der erweiterten Zone im wesentlichen und gleichmässig diskontinuierlich sind, d. h. dass Öffnungen unter regelmässigen Abstand über diese verteilt sind, deren Abmessung ausreichend klein ist, um die Katalysatorpartikel daran zu hindern, quer durch diese Wandungen zu treten, jedoch ausreichend gross ist, um den Durchgang durch diese Öffnungen eines aufsteigenden Stroms eines Mischfluids zu ermöglichen, dadurch gekennzeichnet, dass dieses Fluid, bestehend aus der flüssigen zu behandelnden Kohlenwasserstoffcharge und gasförmigem Wasserstoff, welches mittels wenigstens einer Verteilerzone unter der oder den sich erweiternden das katalytische Bett tragenden Zonen eingeführt wird und dann gegen die sich erweiternden Zone(n) sich richtet, welche das katalytische Bett tragen und dabei aber zunächst, bevor sie zu einer erweiterten Zone gelangen, auf einen Raum treffen, dessen oberer Teil mit ausreichend grossen Öffnungen versehen ist, damit der grössere Teil der gasförmigen Phase des Fluids hindurchtreten kann, jedoch ausreichend klein sind, um den Durchgang des grösseren Teils der flüssigen Phase des Fluids zu verhindern, wobei der Raum von vertikalen Wandungen durchquert wird, welche Öffnungen quer durch diesen Raum begrenzen, derart, dass das Fluid im Inneren dieses Raumes sich einerseits in eine gasförmige Phase und andererseits in eine flüssige Phase teilt wobei der grössere Teil der gasförmigen Phase diese Wandung über diese Öffnungen des oberen Teils dieses Raums erreicht und der grössere Teil der flüssigen Phase eine erweiterte Zone erreicht, nachdem er quer durch diese Wandungen, die diesen Raum begrenzen, gewandert ist und nachdem eine erneute Vermischung (oberhalb dieser Öffnungen dieses oberen Teils des Raumes) mit dem grösseren Teil der gasförmigen Phase stattgefunden hat.

6. Vefahren nach Anspruch 5, dadurch gekennzeichnet, dass die gasförmige Phase und die flüssige Phase zwischen dem oberen Teil dieses Raumes und einer sich erweiternden Zone quer durch eine Vielzahl länglicher paralleler miteinander nicht in Verbindung stehender und im wesentlichen vertikaler oder zum Teil vertikaler oder zum Teil schräger Zonen wandern.

7. Verfahren zur Wasserstoffbehandlung oder Wasserstoffviskoreduktion oder Wasserstoffumwandlung von Kohlenwasserstoffen in Anwesenheit eines festen Katalysators, der in Form eines festen oder beweglichen Bettes aus katalytischen Partikeln verwendet wid, wobei das Verfahren in einer Reaktionszone durchgeführt wird, die im wesentlichen die Form eines länglichen und im wesentlichen vertikalen Umdrehungsvolumens hat, wobei die Feststoffpartikel im oberen Teil der Reaktionszone zugeführt und allmählich, nachdem sie diese Zone von oben nach unten durchwandert haben, über das untere Ende einer sich erweiternden Zone in der Gestalt eines umgekehrten Kegels oder einer umgekehrten Pyramide, d. h. eines Kegels oder einer Pyramide, deren Spitze nach unten weist, abgezogen werden, einer Spitze, in welche wenigstens eine Öffnung einer Abmessung gebohrt ist, die zum Abziehen der Katalysatorpartikel notwendig ist, wobei die Wandungen dieser erweiterten Zone im wesentlichen und regelmässig diskontinuierlich sind, d. h., dass über sie Öffnungen mit regelmässigem Abstand verteilt sind, deren Abmessung ausreichend klein ist, um die Katalysatorpartikel daran zu hindern, durch diese Wandungen zu treten, jedoch ausreichend gross ist, um den Durchgang durch diese Öffnungen eines aufsteigenden Gasstroms eines Mischfluids zu ermöglichen, dadurch gekennzeichnet, dass dieses Fluid, bestehend aus der flüssigen zu behandelnden Kohlenwasserstoffcharge und gasförmigem Wasserstoff, mittels wenigstens einer Verteilerzone eingeführt wird, die unter der oder den sich erweiternden Zonen, die das katalytische Bett tragen, angeordnet ist, dann durch eine Vielzahl zellenförmiger Schichten wandert, die auf dem Abschnitt der Reaktionszone angeordnet und einerseits zwischen der oder den Verteilerzonen und andererseits einer sich erweiternden Zone, die das katalytische Bett abstützt, angeordnet sind.

8. Verfahren zur Wasserstoffbehandlung oder Wasserstoffviskoreduktion oder Wasserstoffumwandlung von Kohlenwasserstoffen in Anwesenheit eines festen Katalysators, der in Form eines festen oder beweglichen Bettes katalytischer Partikel verwendet wird, wobei das Verfahren in einer Reaktionszone durchgeführt wird, die im wesentlichen die Form eines länglichen und im wesentlichen vertikalen Umdrehungsvolumens hat, wobei die Feststoffpartikel im oberen Teil der Reaktionszone eingeführt werden und allmählich, nachdem sie diese Zone von oben nach unten durchwandert haben, über das untere Ende einer sich erweiternden Zone abgezogen werden, die die Gestalt eines umgekehrten Kegels oder einer umgekehrten Pyramide hat, d. h. eines Kegels oder einer Pyramide, deren Spitze nach unten weist, wobei die Spitze von wenigstens einer Öffnung einer Abmessung durchbohrt ist, die zum Abziehen der Katalysatorpartikel notwendig ist, wobei die Wandungen dieser erweiterten Zone im wesentlichen und regelmässig diskontinuierlich sind, d. h., das die Öffnungen über diese Wand mit regelmässigem Abstand verteilt sind und deren Abmessung ausreichend klein ist, um die Katalysatorpartikel daran zu hindern, durch diese Wandungen zu treten, jedoch ausreichend gross ist, um den Durchgang durch diese Öffnungen eines aufsteigenden Stroms eines Mischfluids zu ermöglichen, dadurch gekennzeichnet, dass dieses Fluid, bestehend aus der flüssigen Charge zu behandelnder Kohlenwasserstoffe und gasförmigen Wasserstoffs in die Reaktionszone eingeführt wird, indem es über (a) eine Leitung, die das Fluid in das Innere der Reaktionszone im unteren Teil dieser Reaktionszone führt wandert und (b) über einen unter einer solchen erweiterten Zone befindlichen Raum wandert, wobei der untere Teil dieses Raums die Gestalt einer länglichen und vertikalen Kammer im wesentlichen von der gleichen Achse wie der der erweiterten Zone aufweist und der obere Teil dieses Raums die Form einer ebenfalls erweiterten Zone hat, die sich so unter dieser gesamten erweiterten Zone parallel zu dieser Zone derart verlängert, dass das Fluid in das katalytische Bett an jeder Stelle dieser erweiterten Zone Zugang findet.

9. Verfahren nach einem der Ansprüche 1 bis 8, dadurch gekennzeichnet, dass wenigstens eine Abschreckung (Abkühlung) mit Hilfe eines gasförmigen oder flüssigen Fluids im Inneren des festen oder beweglichen katalytischen Bettes vorgenommen wird, wobei das Abschreckfluid mit Hilfe einer Verteilerzone eingeführt wird, die aus einer Hauptleitung besteht, deren Ende im Inneren der Reaktionszone im wesentlichen vertikal ist und sich in eine Vielzahl von sternförmig angeordneten Zweigleitungen unterteilt und jede Zweigleitung mit mehreren regelmässig ausgebildeten Öffnungen längs jeder Zweigleitung versehen ist, Öffnungen, über die das Fluid in das Innere des katalytischen Bettes eingespritzt oder eingeblasen wird.

10. Vorrichtung zur Durchführung des Verfahrens nach Anspruch 1 mit einem Reaktor (1), Einrichtungen (2) zum Einführen frischen Katalysators in den oberne Teil des Reaktors, Einrichtungen zum Abziehen des benützten Katalysators im unteren Teil dieses Reaktors, wobei diese Abzugseinrichtungen wenigstens einen Abzugstrichter (5) von Kegel- oder Pyramidengestalt umfassen, deren Spitze nach unten weist, wobei um die Spitze eine Öffnung (4) vorgesehen ist, die ausreichend gross ist, um den benützten Katalysator aus dem Reaktor abzuführen, Einrichtungen (7) zum Zuführen eines Fluids im unteren Teil des Reaktors sowie Einrichtungen (11) zum Abführen des behandelten Fluids im oberen Teil des Reaktors, wobei die Wand dieses Abziehtrichters (5) mit Perforationen oder Schlitzen (6) versehen ist, die im wesentlichen über die gesamte Höhe dieses Trichters verteilt sind und die Abmessung dieser Perforationen ausreichend klein ist, um den Durchgang der Katalysatorpartikel durch diese Wand zu verhindern, jedoch ausreichend gross ist, um den Durchgang durch diese Wand eines aufsteigenden Stroms der Fluidcharge zu ermöglichen, gekennzeichnet durch wenigstens eine Verteilerzone eines Fluids, das aus einem Gas und einer Flüssigkeit besteht, wobei diese Zone einen Rohrstutzen (7) umfasst, der nach Eintritt in das Inneren des Reaktors in wenigstens einem Ende endet, wobei das Ende (8) bzw. das Rohrstück unterhalb des Abzugstrichters im wesentlichen vertikal ist und sich in ein Bündel wenigstens dreier sternförmig angeordneter Zweigleitungen (9) oder einer äquivalenten Einrichtung auffächert, wobei jede Zweigleitung mit Perforationen oder Schlitzen, die über die Länge der Zweigleitung verteilt sind, versehen ist, über welche dieses Fluid eingefüllt oder eingespritzt wird.

11. Vorrichtung nach Anspruch 10, dadurch gekennzeichnet, dass diese Zweigleitungen im wesentlichen horizontal ausgebildet sind.

12. Vorrichtung nach Anspruch 10, dadurch gekennzeichnet, dass die Zweigleitungen geneigt sind, wobei der Neigungswinkel zwischen 0 und 60°, bezogen auf die Horizontale, beträgt.

13. Vorrichtung nach Anspruch 10, dadurch gekennzeichnet, dass die Zweigleitungen gewellte Gestalt haben.

14. Vorrichtung nach Anspruch 10, dadurch gekennzeichnet, dass die Perforationen oder Schlitze unterhalb, oberhalb und auf den Seiten der Zweigleitungen angeordnet sind.

15. Vorrichtung zur Durchführung des Verfahrens nach Anspruch 5 mit einem Reaktor (1) (Fig. 6), Einrichtungen zum Einführen des frischen Katalysators im oberen Teil des Reaktors, Einrichtungen zum Abziehen des benützten Katalysators im unteren teil dieses Reaktors, wobei diese Abzugseinrichtungen wenigstens einen Abzugstrichter (5) konischer oder pyramidenförmiger Gestalt umfassen, deren Spitze nach unten weist, wobei um die Spitze eine Öffnung (4) vorgesehen ist, die ausreichend gross ist, um den benützten Katalysator aus dem Reaktor abzuziehen, Einrichtungen zum Einführen eines Fluids, bestehend aus einer Flüssigkeit und einem gas im unteren Teil des Reaktors unter der Wand dieses unten definierten Trichters (5) sowie Einrichtungen zum Abziehen des Fluids im oberen Teil des Reaktors, wobei die Wandung dieses Abzugstrichters (5) mit Peforationen oder Schlitzen (6) versehen ist, die im wesentlichen über die gesamte Höhe dieses Trichters verteilt sind, wobei die Abmessung dieser Perforationen ausreichend klein ist, um den Durchgang der Katalysatorpartikel durch diese Wand zu verhindern, jedoch ausreichend gross ist, um den Durchgang durch diese Wand eines aufsteigenden Stroms der Fluidcharge zu ermöglichen, dadurch gekennzeichnet, dass man zwischen dem Trichter (5) und den Fluideinführungseinrichtungen anordnet: (α) ein Gitter (14) (oder irgend eine äquivalente Einrichtung) dessen Perforationen (20) ausreichend klein sind, um den Durchgang des grösseren Teils der flüssigen Fluidphase zu verhindern und nur den Durchgang dem grösseren Teil der gasförmigen Phase des Fluids zu lassen, (β) kontinuierliche und im wesentlichen vertikale Wandungen oder Begrenzungen (15), die unter dem Gitter (14) angeordnet sind und welche sich auf dem Gitter (14) abstützen und deren untere Enden im Reaktor auf einem Niveau angeordnet sind, das im allgemeinen oberhalb desjenigen der Einrichtungen (7 und 8) zur Einführung des Fluids sich befinden, wobei diese Begrenzungen oder Wandungen so eine Kammer (18) sowie kaminartige Ausbildungen (19) begrenzen und (γ) Böden oder Schikanen (21), welche unter den unteren Enden der kaminartigen Ausbildungen angeordnet sind.

16. Vorrichtung nach Anspruch 15, die darüber hinaus (Fig. 7) eine Vielzahl länglicher paralleler Kammern (23) aufweist, die nicht miteinander in Verbindung stehen und vertikal oder schräg oder zum Teil vertikal und zum Teils schräg ausgebildet sind und zwischen dem Gitter (14) und dem oder den Trichter(n) (5) angeordnet sind.

17. Vorrichtung zur Durchführung des Verfahrens nach Anspruch 7 mit einem Reaktor (1) (Fig. 9), Einrichtungen zum Einführen frischen Katalysators im oberen Teil des Reaktors, Einrichtungen zum Abziehen des benützten Katalysators im unteren Teil dieses Reaktors, wobei diese Abzugseinrichtungen wenigstens einen Abzugstrichter (5) konischer oder pyramidenförmiger Gestalt aufweisen, dessen Spitze nach unten weist, wobei um die Spitze eine ausreichend grosse Öffnung (4) vorgesehen ist, um den benützten Katalysator aus dem Reaktor abzuziehen, wobei die Wandung des Abzugstrichters (5) mit Perforationen oder Schlitzen (6) versehen ist, die im wesentlichen über die gesamte Höhe dieses Trichters verteilt sind, wobei die Abmessung dieser Perforationen ausreichend klein ist, um den Durchgang der Katalysatorpartikel quer durch diese Wand zu verhindern, jedoch ausreichend gross ist, um den Durchgang durch diese Wand eines aufsteigenden Stroms eines Fluids zu ermöglichen sowie Einrichtungen zum Einführen eines Fluids im unteren Teil des Reaktors und Einrichtungen zum Abziehen des Fluids im oberen Teil des reaktors, dadurch gekennzeichnet, dass angeordnet zwischen Trichter (5) und Fluideinführungseinrichtungen mehrere aufeinander gepresste Platten oder Böden (24) vorgesehen sind, wobei jede Platte eine unebene oder gewellte (d. h. zellenförmige) Gestalt derart aufweist, dass die Gesamtheit (26) dieser Platten eine Vielzahl zellenförmiger Räume bildet, die im wesentlichen kontinuierlich sind und ein Wandern des Fluids von unten nach oben quer durch diese Plattenanordnung ermöglichen.

18. Vorrichtung zur Durchführung des Verfahrens nach Anspruch 8 mit (Fig. 11) einem Reaktor (1), Einrichtungen zum Einführen frischen Katalysators im oberen Teil des Reaktors, Einrichtungen zum Abziehen des benützten Katalysators im unteren Teil dieses Reaktors, wobei diese Abzugseinrichtungen wenigstens einen Abzugstrichter (5) konischer oder pyramidenförmiger Gestalt umfassen, deren Spitze nach unten weist, wobei um die Spitze eine ausreichend grosse Öffnung ausgespart oder vorgesehen ist, um den benützten Katalysator aus dem Reaktor abzuziehen, wobei die Wand dieses Abzugstrichters (5) mit Perforationen oder Schlitzen (6) versehen ist, die im wesentlichen über die gesamte Höhe dieses Trichters verteilt sind, wobei die Abmessung dieser Perforationen ausreichend klein ist, um den Durchgang der Katalysatorpartikel durch diese Wand zu verhindern, jedoch ausreichend gross ist, um den Durchgang eines aufsteigenden Stroms eines Fluids durch diese Wand zu ermöglichen, Einrichtungen zum Einführen eines Fluids im unteren Teil des Reaktors sowie Einrichtungen zum Abziehen des behandelten Fluids im oberen Teil des Reaktors, dadruch gekennzeichnet, dass diese Fluideinführungseinrichtungen gebildet werden durch eine Verteilerzone mit (a) einem in den Reaktor (1) eindringenden Rohrstutzen (7) und (b) einem Mantel, der im oberen Teil eine Doppelwand mit wenigstens einem Abzugstrichter (5) bildet, wobei der Mantel im unteren Teil ein längliches vertikales Rohr (8) von der gleichen Achse wie Trichter-Gitter (5) bildet und im oberen Teil einen Trichter (28) unter dem Trichter-Gitter (5) aufweist.

19. Vorrichtung nach einem der Ansprüche 10 bis 18, die im übrigen oberhalb des oder der Trichter (15) wenigstens eine Verteilerzone aufweist, wobei diese Zone (welche für Abschreckvorgänge bestimmt ist) einen Rohrstutzen, der in das Innere des Reaktors oberhalb der Wandung dieses Trichters eindringt, umfasst und dessen Ende (oder Ansatzstück) im wesentlichen vertikal ausgebildet ist und sich in ein Bündel aus wenigstens drei sternförmig angeordneten Zweigleitungen auffächert, wobei jede Zweigleitung mit Perforationen oder Schlitzen versehen ist, die über die gesamte Länge der Zweigleitung verteilt sind.

## Claims

1. A process for the hydrotreatment or hydrovisbreaking or hydroconversion of hydrocar-

bons in the presence of a solid catalyst used as a fixed or moving bed of catalyst particles, said process being effected in a reaction zone having substantially the shape of an elongate volume of revolution and being substantially vertical, the solid particles being introduced at the upper part of the reaction zone and progressively withdrawn, after having downwardly progressed through said zone, from the lower end of a flared zone having the shape of an inverted cone or an inverted pyramid i.e. a cone or a pyramid whose apex is turned downwardly, apex wherethrough is pierced at least one opening of the required size for discharging the solid particles, the walls of said flared zone being substantially and regularly discontinued, i. e. being provided with several regularly spaced openings of a sufficiently small size to prevent the solid particles to pass through said walls, but sufficiently large to allow passage, through said openings, to an ascending stream of a mixed fluid, the process being characterised in that the said fluid, formed of the liquid hydrocarbon charge and gaseous hydrogen, is introduced through at least one distribution zone placed below the one or more flared zones which hold the catalyst bed, each distribution zone consisting of a main duct and comprising at least one end inside the reaction zone, said end of said duct (inside the reaction zone and below said flared zone) being substantially vertical and being subdivided into a plurality of branches arranged according to a star configuration, each branch being provided with several orifices where through is injected the fluid.

2. A process according to Claim 1, wherein the branches in star configuration are substantially horizontal.

3. A process according to Claim 1, wherein said branches are inclined, the inclination angle being comprised about between 0 and 40° to a horizontal line.

4. A process according to Claim 1, wherein said branches have an undulating shape.

5. A process for the hydrotreatment or hydrovisbreaking or hydroconversion of hydrocarbons in the presence of a solid catalyst used as a fixed or moving bed of catalyst particles, said process being effected in a reaction zone having substantially the shape of an elongate volume of revolution and being substantially vertical, the solid particles being introduced at the upper part of the reaction zone and progressively withdrawn, after having downwardly progressed through said zone, from the lower end of a flared zone having the shape of an inverted cone or an inverted pyramid i. e. a cone or a pyramid whose apex is turned downwardly, apex wherethrough is pierced at least one opening of the required size for discharging the solid particles, the walls of said flared zone being substantially and regularly discontinued, i. e. being provided with several regularly spaced openings of a sufficiently small size to prevent the solid particles to pass through said walls, but sufficiently large to allow passage, through said openings, to an ascending stream of a mixed fluid, the process being characterized in that the said fluid, formed of the liquid hydrocarbon charge and gaseous hydrogen, introduced through at least one distribution zone placed below the one or more flared zones which hold the catalyst bed, is conveyed to the one or more flared zones which hold the catalyst bed and, before reaching a flared zone, passes through a space whose upper part is provided with sufficiently large orifices to give passage to the major part of the fluid gaseous phase but sufficiently small to prevent the passage of the major part of the fluid liquid phase said space being traversed by vertical walls which define openings through said space so that the fluid inside said space is divided into a gaseous phase and a liquid phase, the major part of the gaseous phase reaching said wall through said orifices of said upper part of said space, the major part of the liquid phase reaching a flared zone after having progressed through said walls which define said space and after having been admixed again (above said orifices of said upper part of said space) with the major part of the gaseous phase.

6. A process according to Claim 5 wherein, in addition, the gaseous phase and the liquid phase progress between the upper part of said space and a flared zone, through a plurality of non communicating parallel elongate zones, substantially vertical or oblique or partly vertical or oblique.

7. A process for the hydrotreatment or hydrovisbreaking or hydroconversion of hydrocarbons in the presence of a solid catalyst used as a fixed or moving bed of catalyst particles, said process being effected in a reaction zone having substantially the shape of an elongate volume of revolution and being substantially vertical, the solid particles being introduced at the upper part of the reaction zone and progressively withdrawn, after having downwardly progressed through said zone, from the lower end of a flared zone having the shape of an inverted cone or an inverted pyramid i. e. a cone or a pyramid whose apex is turned downwardly, apex wherethrough is pierced at least one opening of the required size for discharging the solid particles, the walls of said flared zone being substantially and regularly discontinued, i. e. being provided with several regularly spaced openings of a sufficiently small size to prevent the solid particles to pass through said walls, but sufficiently large to allow passage, through said openings, to an ascending stream of a mixed fluid, the process being characterized in that the said fluid, formed of the liquid hydrocarbon charge an gaseous hydrogen, introduced through at least one distribution zone placed below the one or more flared zones which hold the catalyst bed, progresses through a plurality of cellular layers placed in the section of the reaction zone and located between, on the one hand, the one or more distribution zones and, on the other hand, one flared zone which holds the catalyst bed.

8. A process for the hydrotreatment or hydrovisbreaking or hydroconversion of hydrocarbons in the presence of a solid catalyst used as a fixed or moving bed of catalyst particles, said process being effected in a reaction zone having substantially the shape of an elongate volume of revolution and being substantially vertical, the solid particles being introduced at the upper part of the reaction zone and progressively withdrawn, after having downwardly progressed through said zone, from the lower end of a flared zone having the shape of an inverted cone or an inverted pyramid i. e. a cone or a pyramid whose apex is turned downwardly, apex wherethrough is pierced at least one opening of the required size for discharging the solid particles, the walls of said flared zone being substantially and regularly discontinued, i. e. being provided with several regularly spaced openings of a sufficiently small size to prevent the solid particles to pass through said walls, but sufficiently large to allow passage, through said openings, to an ascending stream of a mixed fluid, the process being characterized in that the said fluid, formed of the liquid hydrocarbon charge and gaseous hydrogen, is introduced through the reaction zone by moving through (a) a duct which supplies the fluid inside the reaction zone in the low part of said reaction zone and (b) through an enclosure located below a so-called flared zone, the lower part of the said enclosure having the shape of an elongated and vertical member whose the axis is the same as for the said flared zone, and the upper part of said enclosure having also the shape of a flared zone, thus extending below the whole of said flared zone, parallely to said zone, so that the fluid may reach the catalyst bed at any point of said flared zone.

9. A process according to one of Claims 1 to 8, wherein at least one quench (cooling) by means of a gaseous or liquid fluid is effected inside the fixed or moving catalyst bed, the fluid of the quench being introduced through a distribution zone consisting of a main pipe whose end inside the reaction zone is substantially vertical and is subdivided into a plurality of branches arranged in star shape, each branch being provided with several orifices regularly distributed along each branch, orifices wherethrough the fluid is injected inside the catalyst bed.

10. An apparatus for carrying out the process according to Claim 1, comprising a reactor (I), means (2) for introducing fresh catalyst at the upper part of the reactor, means for discharging the used catalyst at the lower part of said reactor, said discharge means comprising at least one withdrawing funnel (5) of conical or pyramidal shape, whose apex is turned downwardly, apex around which is provided an opening (4) of sufficient size to discharge the used catalyst outside the reactor, means (7) for introducing a fluid at the lower part of the reactor and means (II) for discharging the treated fluid at the upper part of the reactor, the wall of said funnel being provided with perforations or slots (6) substantially distributed over the whole height of said funnel, the size of said perforations being sufficiently small to prevent the passage of the catalyst particles through said wall but sufficiently large to give passage through said wall to an ascending stream of the fluid charge, the apparatus being characterized in that it contains at least one box for distributing a fluid consisting of a gas and a liquid, said box comprising a tube (7) which in its part inside the reactor comprises at least one end or end part (8) located below the withdrawing funnel, substantially vertical and extended by a set of at least three branches (9) in star-like arrangement or any equivalent device, each branch being provided with perforations or slots, distributed over at least a portion of the length of the branch, through which said fluid is injected.

11. An apparatus according to Claim 10, wherein the branches are substantially horizontal.

12. An apparatus according to Claim 10, wherein the branches are inclined, the inclination angle being comprised between 0 and 60° to a horizontal line.

13. An apparatus according to Claim 10, wherein the branches are of undulating shape.

14. An apparatus according to Claim 10, wherein the major part of the perforations or slots are provided below, above and on the sides of the branches.

15. An apparatus for carrying out the process according to Claim 5, comprising a reactor (I) (Fig. 6), means for introducing fresh catalyst at the upper part of the reactor, means for discharging used catalyst at the lower part of said reactor, said discharge means comprising at least one withdrawing funnel (5) of conical or pyramidal shape, whose apex is turned downwardly, apex around which is provided an opening (4) sufficiently large for discharging the used catalyst outside the reactor, means for introducing a fluid, consisting of a liquid and a gas, at the lower part of the reactor under the wall (described below) of said funnel (5), and means for discharging fluid at the upper part of the reactor, the wall of said withdrawing funnel (5) being provided with perforations or slots (6) substantially distributed over the whole height of said funnel, the size of said perforations being sufficiently small to prevent the passage of the catalyt particles through said wall but sufficiently large to allow the passage through said wall of a fluid ascending stream, the apparatus being characterised in that the following devices are placed between the funnel (5) and the fluid introduction means: ($\alpha$) a grid (14) (or any equivalent means) whose perforations (20) are sufficiently small to prevent the passage of the major part of the fluid liquid phase, giving only passage to the major part of the fluid gaseous phase, ($\beta$) continuous and substantially vertical walls or barreirs (15) taking bearing on the grid (14) and whose lower ends are placed into the reactor at a level generally higher than that of the fluid introduction means (7) and (8), these barriers or walls thus defining a compartment (18) and chimneys (19) and ($\gamma$) plates or baffles (21) arranged below the lower ends of the chimneys.

16. An apparatus according to Claim 15, further containing (fig. 7) a plurality of parallel, non communicating elongate members (23), substantially vertical or oblique, or partly vertical and partly oblique, placed between the grid (14) and the funnel or funnels (5).

17. An apparatus for carrying out the process according to Claim 7, comprising a reactor (I) (Fig. 9), means for introducing fresh catalyst at the upper part of the reactor, means for discharging used catalyst at the lower part of said reactor, said discharge means comprising (a) at least one withdrawing funnel (5) of conical or pyramidal shape, whose apex is turned downwardly, apex around which is provided an aperture (4) sufficiently large for discharging the exhausted catalyst outside the reactor, the wall of said withdrawing funnel (5) being provided with perforations or slots (6) substantially distributed over the whole height of said funnel, the size of said perforations being sufficiently small to prevent the passage of the catalyst particles through said wall but sufficiently large to allow the passage through said wall of a fluid ascending stream and (b) means for introducing a fluid at the lower part of the reactor and means for discharging fluid at the upper part of the reactor, the apparatus being characterized in that it comprises, at a location between the funnel (5) and the means for introducing the fluid, several plates (24) pressed against each other, each plate having a rough or corrugated (i. e. cellular) shape, the assembly (26) of said plates thus forming a multitude of substantially continuous cellular spaces, so that said fluid may flow upwardly through the plates assembly.

18. An apparatus for carrying out the process according to Claim 8, comprising (fig. 11) a reactor (1), means for introducing fresh catalyst at the upper part of the reactor, means, for discharging used catalyst at the lower part of said reactor, said discharge means comprising at least one withdrawing funnel (5), of conical or pyramidal shape, whose apex is turned downwardly, apex around which is provided an opening (4) sufficiently large for discharging the used catalyst outside the reactor the wall of said withdrawing funnel (5) being provided with perforations or slots (6) substantially distributed over the whole height of said funnel, the size of said perforations being sufficiently small to prevent the passage of the catalyst particles through said wall, but sufficiently large to give passage through said wall to an ascending fluid stream, means for introducing a fluid at the lower part of the reactor and means for discharging the treated fluid at the upper part of the reactor, the apparatus being characterized in that the means for introducing the fluid consists of a distribution box comprising (a) one pipe (7) penetrating into the reactor (1) and (b) at least one withdrawing funnel (5), said envelope comprising at its lower part a vertical elongate tube (8) having the same axis as the funnel-grid (5) and at its upper part, a funnel (28) placed below the funnel-grid (5).

19. An apparatus according to one of Claims 10 to 18, further containing above the one or more funnels (5), at least one distribution box, said box (destined to effect quenches) comprising a tube penetrating inside the reactor, above the wall and whose end part is substantially vertical and extends in a set of branches in star arrangement, each branch being provided with perforations or slots distributed over the whole length of the branch.

0 107 986

FIG.1

FIG.2

FIG.3

FIG.4

FIG.1 A

15

FIG.5

FIG.6

FIG.5A

FIG.7

FIG.7B

FIG.7A

**FIG.8**

**FIG.8A**

**FIG.9**

**FIG.10**

**FIG.9A**

21

FIG.11

FIG.12